# EUROPÄISCHE PATENTSCHRIFT

(11) **EP 1 061 272 B1**
(45) Veröffentlichungstag und Bekanntmachung des Hinweises auf die Patenterteilung: **19.03.2003**
(21) Anmeldenummer: 99810536.5
(22) Anmeldetag: 17.06.1999
(51) Int. Cl.: F16B 7/18, F16B 7/02

(54) **Querverbindung von Profilstäben**
Cross linkage for profile bars
Liaison transversale pour des barres profilées

(43) Veröffentlichungstag der Anmeldung: 20.12.2000
(73) Patentinhaber: Zihlmann Engineering, 5436 Würenlos (CH)
(72) Erfinder: Zihlmann, Siegfried, 5436 Würenlos (CH)
(74) Vertreter: Patentanwälte Breiter + Wiedmer AG

(56) Entgegenhaltungen:
- EP-A- 0 329 074
- DE-A- 4 142 273
- DE-A- 4 326 642
- DE-A- 4 343 381
- US-A- 1 688 087
- US-A- 5 192 145

## Beschreibung

Die Erfindung betrifft eine Querverbindung von zwei in einem Winkel aufeinanderstossenden, mit hinterschnittenen Längsnuten versehenen Profilstäben, mit einer an ihrem einen Ende einen Kopf aufweisenden Verbindungsschraube, die parallel zur Symmetrieachse eines längslaufenden Profilstabes in einer hinterschnittenen Längsnut desselben angeordnet ist, mit ihrem andern Ende in einen in einer hinterschnittenen Längsnut des quer verlaufenden Profilstabes angeordneten Nutenstein eingreift und mit ihrem Kopf eine Durchtrittsbohrung für die Verbindungsschraube aufweisendes, in die hinterschnittene Längsnut eingesetztes Spreizelement hintergreift, wobei das Spreizelement durch Einwirkung einer durch die Verbindungsschraube erzeugbaren Axialkraft quer zur Längsnut spreizbar und in dieser als Widerlager festklemmbar ist.

Aus der DE-A 3438773 ist eine Querverbindung von zwei rechtwinklig aneinanderstossenden, mit hinterschnittenen Längsnuten versehenen Profilstäben mit einer Verbindungsschraube bekannt. Die Verbindungsschraube ist parallel zur Symmetrieachse eines längslaufenden Profilstabes in einer hinterschnittenen Längsnut desselben angeordnet und greift mit ihrem dem Schraubenkopf abgewandten Ende in einen in einer hinterschnittenen Längsnut des quer verlaufenden Profilstabes angeordneten Nutenstein ein. Mit ihrem Kopf hintergreift die Verbindungsschraube ein zylindrisches Widerlagerstück, das in die hinterschnittene Längsnut des Profilstabes axial unverschieblich eingebaut ist und eine Durchtrittsbohrung für die Verbindungsschraube aufweist. Für den Zusammenbau ist es erforderlich, in dem anzuschliessenden Profilstab zylindrische Ausnehmungen quer zu seiner Längserstreckung herzustellen, um das zylindrische Widerlagerstück unterbringen zu können. Darüber hinaus ist durch das erkennbare zylindrische Widerlagerstück stets eine Befestigungsstelle markiert. Letztlich kann ein einmal mit zylindrischen Querbohrungen versehener Profilstab nicht mehr universell wiederverwendet werden, weil die Querbohrungen stets erkennbar bleiben.

Die DE-A- 4016320 offenbart eine Querverbindung von Profilstäben, die auf der in der DE-A-3438773 beschriebenen Querverbindung mit einem in die Längsnut einsetzbaren zylindrischen Widerlagerstück aufbaut. Der Aussendurchmesser des zylindrischen Widerlagerstückes ist dem Querschnitt der hinterschnittenen Längsnut des Profilstabes so angepasst, dass ein auf dem Aussenumfang des zylindrischen Widerlagerstückes angebrachtes Gewinde als ein in den Werkstoff des Profilstabes eingreifendes, selbstschneidendes Gewinde wirkt. Bei dieser Querverbindung können die zylindrischen Ausnehmungen an den Längsseiten des anzuschliessenden Profilstabes entfallen. Ein wesentlicher Nachteil der Querverbindung mit einem Widerlagerstück mit selbstschneidendem Gewinde liegt jedoch darin, dass das Einsetzen der Widerlagerstücke wegen des zu schneidenden Gewindes einen hohen Kraftaufwand erfordert, der rasch zu einer Ermüdung und zu Schmerzen im Handgelenk eines Monteurs führt, der nacheinander mehrere Querverbindungen herstellt.

Aus der DE-A-4343381 oder der DE-A-4 142 273 ist ein Verbindungselement zur Herstellung einer Querverbindung von Profilstäben der eingangs genannten Art mit einem Spreizelement bekannt. Das Spreizelement besteht aus zwei Spreizteilen, die mit jeweils einer schräg zur Längsachse der Verbindungsschraube in einem Winkel von 45° verlaufenden Keilflächen aufeinander stehen. Ein wesentlicher Nachteil dieser Verbindungsart liegt darin, dass durch die asymmetrische Spreizung lokal unterschiedliche Anpresskräfte zwischen Spreizkörper und Längsnut erzeugt werden, was insgesamt zur einer unzureichenden Fixierung des Spreizkörpers in der Längsnut führt.

Der Erfindung liegt daher die Aufgabe zugrunde, eine Querverbindung der eingangs genannten Art zu schaffen, mit der eine gute Klemmwirkung erreicht werden kann.

Zur erfindungsgemässen Lösung der Aufgabe führt, dass das Spreizelement einen Spreizkörper mit einer axialen Aufnahmebohrung und einen in diese einsetzbaren Keilkörper mit der Durchtrittsbohrung für die Verbindungsschraube umfasst, wobei der Kopf der Verbindungsschraube einer Stirnseite des Keilkörpers anliegt.

Mit dieser symmetrischen Anordnung von zwei ineinandergreifenden Teilen des Spreizelementes wird eine gleichmässig über die Oberfläche des Spreizkörpers verteilte Krafteinwirkung erzeugt, die selbst bei geringen Anzugsmomenten der Verbindungsschraube zu einer hohen Flächenpressung und damit zu einer ausgezeichneten Verklemmung des als Widerlager dienenden Spreizkörpers in der Längsnut führt.

Der Spreizkörper kann einstückig ausgebildet sein. Eine weitere Möglichkeit besteht darin, dass der Spreizkörper als Paket aus einzelnen, in seiner Längsrichtung aneinandergereihten Einzelteilen aus Stahlblech durch Stanzpaketieren gefertigt ist. Bei dieser letztgenannten Variante wird die äussere Formgebung des Spreizelementes und das Anbringen der Aufnahmebohrung wesentlich vereinfacht, da die spanabhebende Bearbeitung zur Herstellung eines Spreizkörpers mit vorgegebenem Querschnitt insbesondere aus einem Rohling aus einem harten Werkstoff zeitaufwendiger und auch teurer ist als das Ausstanzen und Paketieren einzelner Blechsegmente.

Zweckmässigerweise ist der Querschnitt des Spreizkörpers dem Querschnitt der Längsnut des Profilstabes nachgebildet, so dass bei Spreizung praktisch die gesamte Oberfläche des Spreizkörpers der Innenwand der Längsnut anliegt und so zu einer möglichst grossen Anpressfläche führt.

Bevorzugt weist der Spreizkörper zur Erleichterung der Spreizung einen Längsschlitz auf. Bei einer bevorzugten Ausgestaltung der erfindungsgemässen Querverbindung ist der Keilkörper im Spreizkörper mit seiner Keilspitze gegen den Nutenstein gerichtet.

Eine äusserst gleichmässige Verteilung der Anpresskräfte zwischen Spreizkörper und Längsnut ergibt sich dadurch, dass die mit dem Keilkörper zusammenwirkende Innenfläche des Spreizkörpers entsprechend der Keilschräge des Keilkörpers geneigt ausgebildet ist.

Bevorzugt ist der Keilkörper eine Hülse mit konisch verlaufender Mantelfläche, wobei der Spreizkörper eine konisch verlaufende Innenfläche aufweist.

Zur Erhöhung der Stabilität der Querverbindung kann die gegen die Innenfläche der Längsnut gerichtete Oberfläche des Spreizkörpers zumindest teilweise aufgerauht oder mit Erhebungen bzw. Vertiefungen, insbesondere mit Rillen, Riefen oder Zähnen, ausgestattet sein. Bei einer besonders kraft- und formschlüssigen Verbindung sind die Aufrauhungen bzw. die Erhebungen als Widerhaken bildende Spitzen ausgebildet.

Die erfindungsgemässe Querverbindung wird bevorzugt bei Konstruktionen mit Profilstäben aus Aluminium oder aus einem anderen Leichtmetall eingesetzt. Die Einzelteile des Verbindungselementes sind bevorzugt aus Stahl oder aus einem anderen Hartmetall gefertigt. Bei dieser Materialkombination ergeben sich, insbesondere bei gezahnter Oberfläche des Spreizkörpers, äusserst kraftschlüssige, verdrehfeste und stabile Querverbindungen. Selbstverständlich können jedoch bei der erfindungsgemässen Querverbindung auch andere Materialien für die Profilstäbe und für die Einzelteile des Verbindungselementes verwendet werden, wie z.B. Kunststoffe oder Kunststoff/Metall-Verbundmaterialien.

Die erfindungsgemässen Querverbindungen sind insbesondere geeignet für den einfachen Aufbau von Maschinengestellen, Arbeitstischen, Transportlinien und dgl. aus einzelnen aufeinanderstossenden Profilstäben zusammengesetzten Konstruktionen, die durch verdeckt angeordnete Verbindungsschrauben zusammengehalten werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: eine Schrägsicht auf eine Querverbindung von Profilstäben;
- - Fig. 2: eine Schrägsicht auf die Querverbindung von Fig. 1 in teilweise geschnittener Ansicht;
- - Fig. 3: einen Schnitt durch die Querverbindung von Fig. 1 in Richtung der Längsnuten;
- - Fig. 4: eine Schrägsicht auf die einzelnen Verbindungselemente vor deren Zusammenbau;
- - Fig. 5: eine Schrägsicht auf einen Spreizkörper;
- - Fig. 6: eine stirnseitige Ansicht des Spreizkörpers von Fig. 5 in Blickrichtung y;
- - Fig. 7: einen Schnitt durch den Spreizkörper von Fig. 5 entlang der Schnittlinie A-B von Fig. 6;
- - Fig. 8: einen vergrösserten Ausschnitt von Fig. 7.

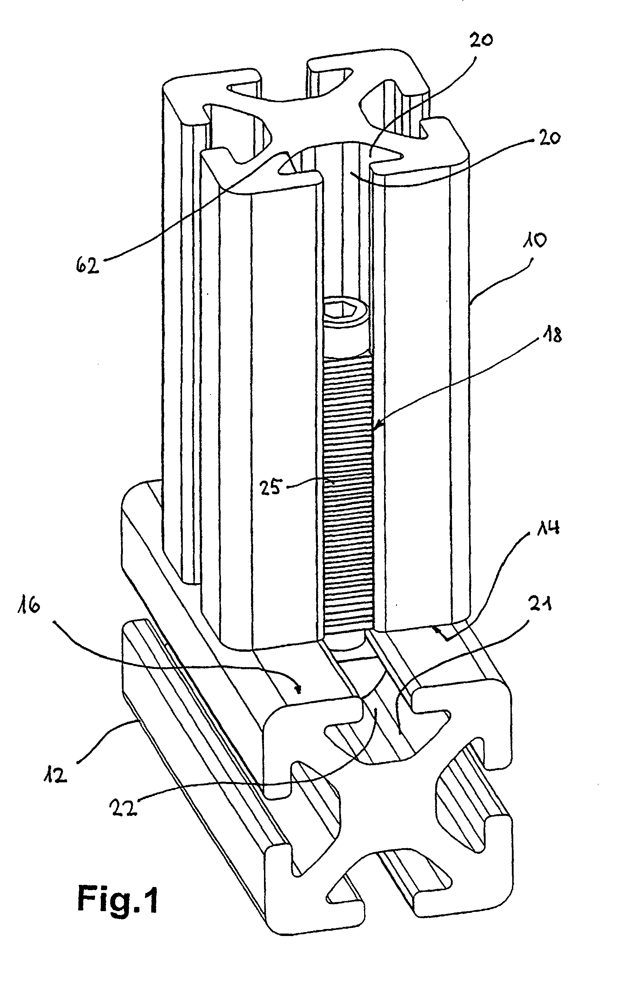

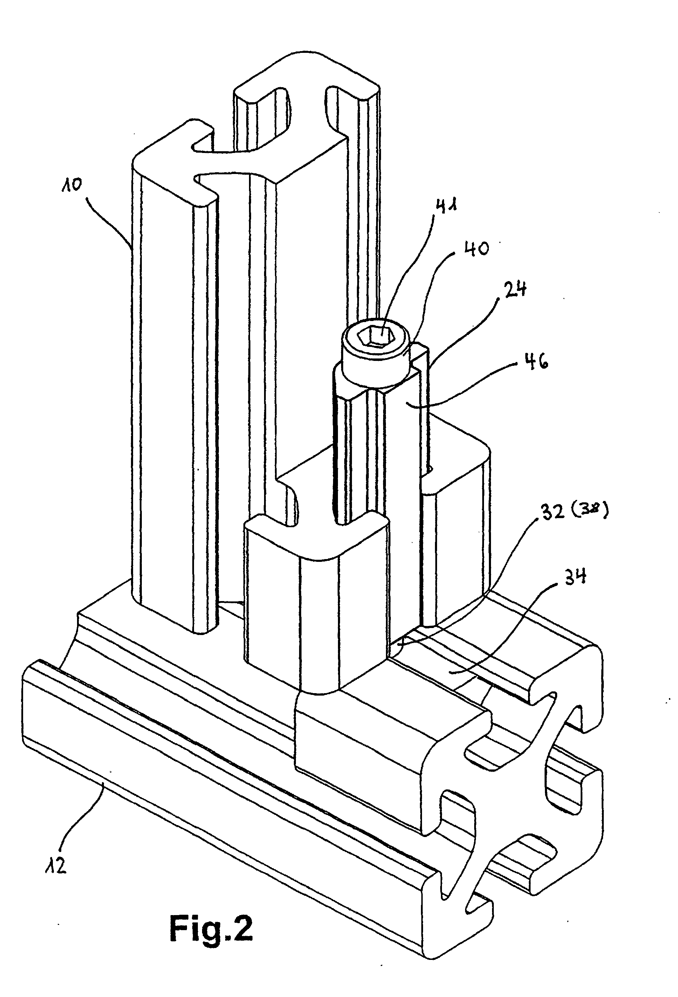

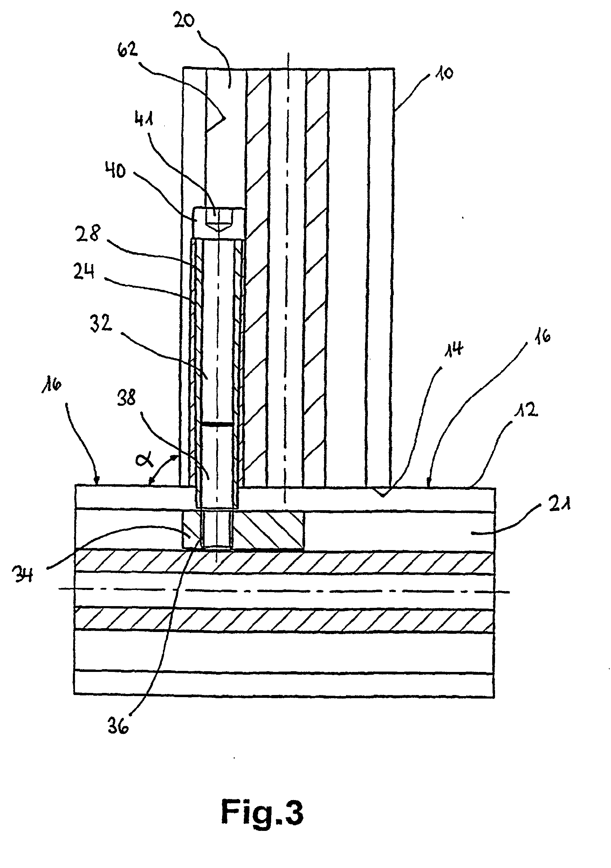

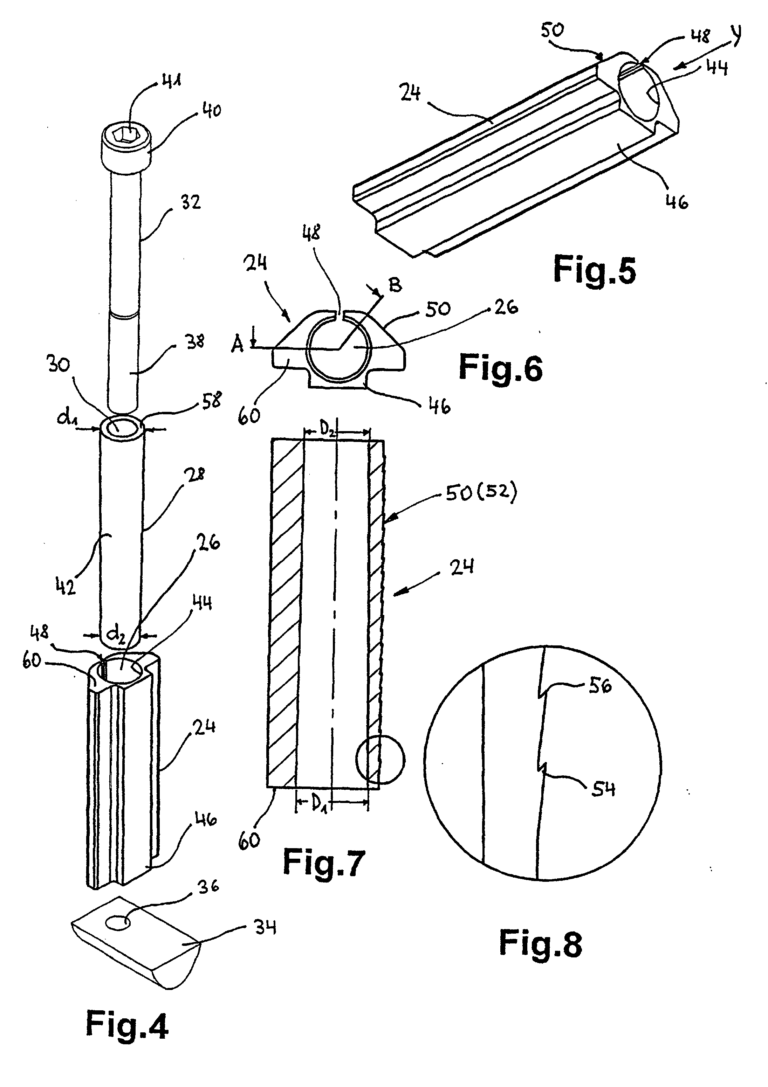

Eine in den Fig. 1 bis 3 dargestellte Anordnung umfasst zwei quer zueinander verlaufende, in einem Winkel α von 90° aufeinanderstossende Profilstäbe 10, 12. Hierbei liegt eine Stirnseite 14 des Profilstabes 10 einer Aussenfläche 16 des quer zum ersten Profilstab 10 verlaufenden zweiten Profilstabes 12 an. Die beiden Profilstäbe 10,12 sind über ein in Fig. 4 dargestelltes, aus vier Bauteilen bestehendes Verbindungselement 18 kraftschlüssig und verdrehfest miteinander verbunden.

Die Profilstäbe 10, 12 weisen hinterschnittene Längsnuten 20, 21 von querschnittlich etwa pilzkopfförmiger Gestalt mit zur Profilaussenfläche 16 gerichteten Öffnungsschlitzen 22 auf. Selbstverständlich können die Profile 10, 12 sowie die hinterschnittenen Längsnuten 20, 21 auch andere als die in der Zeichnung dargestellten Querschnittsformen haben. Ebenso können die Profilstäbe 10, 12 in einem von 90° abweichenden Winkel α aufeinanderstossen. Der Vorteil gleicher Querschnittsformen der Längsnuten 20, 21 bei gleichen oder unterschiedlichen Profilstabquerschnitten liegt darin, dass die Verbindungselemente 18 einheitlich aus identischen Einzelteilen gefertigt sein können.

Gemäss Fig. 4 setzt sich das Verbindungselement 18 zusammen aus einem Spreizkörper 24 mit axialer Aufnahmebohrung 26, einer in die axiale Aufnahmebohrung 26 einschiebbaren Hülse 28, einer die Durchtrittsbohrung 30 der Hülse 28 durchsetzenden Verbindungsschraube 32 und einem Nutenstein 34 mit einer Gewindebohrung 36 für den Eingriff mit dem Schraubengewinde 38 der Verbindungsschraube 32.

Wie in Fig. 1 angedeutet, kann der Spreizkörper 24 als Paket aus einzelnen, in seiner Längsrichtung aneinandergereihten Einzelteilen 25 aus beispielsweise Stahlblech durch Stanzpaketieren gefertigt sein. Die Dicke der einzelnen Blechteile 25 beträgt beispielsweise 0.8 mm. Werden die einzelnen Blechsegmente beim Paketieren wechselseitig um einen geringen Winkel gegeneinander verdreht, so entsteht ein Spreizkörper mit bereits gezahnter Oberfläche.

Die Verbindungsschraube 32 weist einen Kopf 40 mit einer Sechskant- bzw. Inbus-Ausnehmung auf. Die Mantelfläche 42 der Hülse 28 ist in Richtung auf den Nutenstein 34 konisch zulaufend ausgebildet, d.h. der gegen den Schraubenkopf 40 gerichtete stimseitige Aussendurchmesser d₁ der Hülse 28 nimmt in Richtung auf den Nutenstein 34 kontinuierlich bis zu einem gegenüber dem maximalen Aussendurchmesser d₁ minimalen Aussendurchmesser d₂ ab.

Die Innenfläche 44 der axialen Aufnahmebohrung 26 im Spreizkörper 24 ist entsprechend der konisch verlaufenden Mantelfläche 42 der Hülse 28 in der gleichen Richtung konisch verlaufend ausgebildet, d.h. der gegen den Schraubenkopf 40 gerichtete stimseitige Innendurchmesser D₁ der axialen Aufnahmebohrung 26 des Spreizkörpers 24 nimmt in Richtung auf den Nutenstein 34 kontinuierlich bis zu einem gegenüber dem maximalen Innendurchmesser D₁ minimalen Innendurchmessen D₂ ab. Der Querschnitt des Spreizkörpers 24 entspricht in seiner Gestalt dem Querschnitt der Längsnut 20, wobei eine im Spreizkörper 24 integrierte Leiste 46 in den Öffnungsschlitz 22 der Längsnut 20 eingreift. Ohne Spreizung ist das Verbindungselement 18 mit einem geringen Spiel in der Längsnut 20 geführt. Auf seiner der Leiste 46 entgegengesetzten Seite weist der Spreizkörper 24 einen die Innenfläche 44 des Spreizkörpers 24 unterbrechenden Längsschlitz 48 auf.

Wie in den Fig. 5 bis 8 gezeigt, ist die gegen das Innere der Längsnut 20 gerichtete Oberfläche 50 des Spreizkörpers 24 mit einer Zahnung 52 versehen. Die einzelnen Zähne 54 weisen im Einbauzustand gegen den Schraubenkopf 40 weisende Spitzen 56 auf.

Beim Zusammenbau der Profilstäbe 10, 12 werden die in Fig. 4 dargestellten Einzelteile des Verbindungselementes 18 vormontiert, wobei darauf geachtet wird, dass die Verbindungsschraube 32 ohne Krafteinwirkung auf den Spreizkörper 24 mit dem Nutenstein verschraubt ist. Der Spreizkörper 24 wird sodann von der Stirnseite 14 des Profilstabes 10 in diesen eingeführt. Anschliessend wird der von der Stirnseite 14 des Profilstabes 10 abragende Nutenstein 34 stimseitig in die Längsnut 21 des quer zum Profilstab 10 vorgesehenen Profilstabes 12 eingeführt und an die für den Zusammenbau vorgesehene Position verschoben. Anschliessend wird die Verbindungsschraube 32 mit Hilfe eines Inbus-Schlüssels oder -Schraubenziehers angezogen, wobei das Schraubengewinde 38 weiter in die Gewindebohrung 36 des Nutensteines 34 eindringt.

Der auf einer Stirnseite 58 der Hülse 28 aufliegende Kopf 40 der Verbindungsschraube 32 schiebt durch die Schraubbewegung die Hülse 28 weiter in die axiale Aufnahmebohrung 26 des Spreizkörpers 24 ein. Dadurch wird der Spreizkörper 24 gedehnt, d.h. die an den Längsschlitz 48 angrenzenden Teile des Spreizkörpers 24 werden auseinandergedrängt. Bei diesem Spreizvorgang dringen die Zähne 54 in die Innenwand der Längsnut 20 ein. Durch die besondere Ausgestaltung der Zähne 54 mit entgegen der Schraubrichtung gerichteten Spitzen 56 ergibt sich eine Verkrallung im Sinne von Widerhaken, was zu einer besonders guten form- und kraftschlüssen Verbindung führt.

Im allgemeinen sind die Toleranzen und das Spiel zwischen Verbindungselement 18 und der Innenwand der Längsnut 20 so bemessen, dass die Hülse 28 ohne Spreizwirkung bis auf eine verbleibende Länge, die beispielsweise etwa 10 bis 20% der Länge des Verbindungselementes 18 entspricht, in das Verbindungselement 18 eingeschoben. Die maximale Klemmwirkung des Spreizkörpers 24 wird etwa dann erreicht, wenn der Kopf 40 der Schraube auf der Stirnseite 60 des Spreizkörpers 24 aufliegt. Bei weiterem Drehen der Verbindungsschraube 32 wird der Nutenstein 34 gegen die Hinterschneidungsflächen 62 der Längsnut 21 des Profilstabes 12 gepresst, wodurch eine verdrehfeste und stabile Querverbindung der beiden Profilstäbe 10, 12 entsteht.

## Patentansprüche

1. Querverbindung von zwei in einem Winkel (a) aufeinanderstossenden, mit hinterschnittenen Längsnuten (20,21) versehenen Profilstäben (10,12), mit einer an ihrem einen Ende einen Kopf (40) aufweisenden Verbindungsschraube (32), die parallel zur Symmetrieachse eines längslaufenden Profilstabes (10) in einer hinterschnittenen Längsnut (20) desselben angeordnet ist, mit ihrem anderen Ende in einen in einer hinterschnittenen Längsnut (21) des quer verlaufenden Profilstabes (12) angeordneten Nutenstein (34) eingreift und mit ihrem Kopf (40) ein eine Durchtrittsbohrung für die Verbindungsschraube (32) aufweisendes, in die hinterschnittene Längsnut (20) eingesetztes Spreizelement hintergreift, wobei das Spreizelement durch Einwirkung einer durch die Verbindungsschraube (32) erzeugbaren Axialkraft quer zur Längsnut (20) spreizbar und in dieser als Widerlager festklemmbar ist,
**dadurch gekennzeichnet, dass**
das Spreizelement einen Spreizkörper (24) mit einer axialen Aufnahmebohrung (26) und einen in diese einsetzbaren Keilkörper (28) mit der Durchtrittsbohrung (30) für die Verbindungsschraube (32) umfasst, wobei der Kopf (40) der Verbindungsschraube (32) an einer Stirnseite (58) des Keilkörpers (28) anliegt.

2. Querverbindung nach Anspruch 1, **dadurch gekennzeichnet, dass** der Spreizkörper (24) als Paket aus einzelnen, in seiner Längsrichtung aneinandergereihten Einzelteilen (25) aus Stahlblech durch Stanzpaketieren gefertigt ist.

3. Querverbindung nach Anspruch 1 oder 2, **dadurch gekennzeichnet, dass** der Querschnitt des Spreizkörpers (24) dem Querschnitt der Längsnut (20) des Profilstabes (10) nachgebildet ist.

4. Querverbindung nach einem der Ansprüche 1 bis 3, **dadurch gekennzeichnet, dass** der Spreizkörper (24) zur Erleichterung der Spreizung einen Längsschlitz (48) aufweist.

5. Querverbindung nach einem der Ansprüche 1 bis 4, **dadurch gekennzeichnet, dass** der Keilkörper (28) im Spreizkörper (24) mit seiner Keilspitze gegen den Nutenstein (34) gerichtet ist.

6. Querverbindung nach einem der Ansprüche 1 bis 5, **dadurch gekennzeichnet, dass** die mit dem Keilkörper (24) zusammenwirkende Innenfläche (44) des Spreizkörpers (24) entsprechend der Keilschräge des Keilkörpers (28) geneigt ausgebildet ist.

7. Querverbindung nach einem der Ansprüche 1 bis 6, **dadurch gekennzeichnet, dass** der Keilkörper eine Hülse (28) mit konisch verlaufender Mantelfläche (42) ist und der Spreizkörper (24) eine konisch verlaufende Innenfläche (44) aufweist.

8. Querverbindung nach einem der Ansprüche 1 bis 7, **dadurch gekennzeichnet, dass** die gegen die Innenfläche der Längsnut (20) gerichtete Oberfläche (50) des Spreizkörpers (24) zumindest teilweise aufgerauht oder mit Erhebungen bzw. Vertiefungen, insbesondere mit Rillen, Riefen oder Zähnen, ausgestattet ist.

9. Querverbindung nach Anspruch 8, **dadurch gekennzeichnet, dass** die Aufrauhung bzw. die Erhebungen als Widerhaken bildende Spitzen (56) ausgebildet sind.

## Claims

1. Perpendicular connection of two profile rods (10, 12) with undercut linear grooves (20, 21) abutting at an angle (α), with a connecting bolt (32) which has a head (40) at one end and is arranged parallel to the axis of symmetry of a longitudinal profile rod (10) and arranged in an undercut linear groove (20) therein, and with its other end engages in a tenon block (34) arranged in an undercut linear groove (21) of the transverse profile rod (12), and with its head (40) engages behind a spread element which has a through bore for the connecting bolt (32) and is inserted in the undercut linear groove (20), where the spread element, under the effect of the axial force to be generated by the connecting bolt (32), can be spread transverse to the linear groove (20) and firmly clamped in this as an abutment,
**characterised in that**
the spread element comprises a spread body (24) with an axial holder bore (26) and a wedge body (28) which can be inserted therein, with a through bore (30) for the connecting bolt (32), where the head (40) of the connecting bolt (32) lies against a face (58) of the wedge body (28).

2. Perpendicular connection according to claim 1, **characterised in that** the spread body (24) is made from a package of individual components (25), arranged in linear succession, made of sheet steel by punching as a package.

3. Perpendicular connection according to claim 1 or 2, **characterised in that** the cross-section of the spread body (24) matches the cross-section of the linear groove (20) of the profile rod (10).

4. Perpendicular connection according to any of claims 1 to 3, **characterised in that** the spread body (24) has a longitudinal slot (48) to facilitate spreading.

5. Perpendicular connection according to any of claims 1 to 4, **characterised in that** the wedge body (28) is aligned in the spread body (24) with its wedge tip towards the tenon block (34).

6. Perpendicular connection according to any of claims 1 to 5, **characterised in that** the inner surface (44) of the spread body (24) interacting with the wedge body (24) is formed sloping, corresponding to the wedge slopes of the wedge body (28).

7. Perpendicular connection according to any of claims 1 to 6, **characterised in that** the wedge body is a sleeve (28) with tapered generating surface (42) and the spread body (24) has a tapered inner surface (44).

8. Perpendicular connection according to any of claims 1 to 7, **characterised in that** the surface (50) of the spread body (24) facing the inner surface of the linear groove (20) is at least partly roughened, or fitted with protrusions or recesses, in particular grooves, scoring or teeth.

9. Perpendicular connection according to claim 8, **characterised in that** the roughening or protrusions are structured as tips (56) forming barbs.

## Revendications

1. Dispositif de liaison transversale de deux barres profilées (10, 12) qui sont mises bout à bout l'une sur l'autre sous un angle (α), qui comportent des encoches longitudinales en contre-dépouille (20, 21), une vis de liaison (32) qui comporte, à une de ses extrémités, une tête (40), qui est disposée, parallèlement à l'axe de symétrie d'une barre profilée (10) qui s'étend longitudinalement, dans une encoche longitudinale en contre-dépouille (20) de ladite barre, qui s'accroche, par son autre extrémité, dans un coulisseau (34) qui est disposé dans une encoche longitudinale en contre-dépouille (21) de la barre profilée (12) qui s'étend transversalement et qui vient en accrochage, par sa tête (40), avec un élément d'écartement qui comporte un perçage traversant (30) pour la vis de liaison (32) et qui est inséré dans l'encoche longitudinale en contre-dépouille (20), l'élément d'écartement pouvant s'écarter transversalement par rapport à l'encoche longitudinale (20) sous l'effet d'une force axiale pouvant être produite par la vis de liaison (32) et pouvant être fixé par serrage dans l'encoche longitudinale (20),
**caractérisé en ce que**
l'élément d'écartement comprend un corps d'écartement (24) qui comporte un perçage axial de réception (26) et un corps de calage (28) qui peut pénétrer dans ce dernier et qui comporte le perçage traversant (30) pour la vis de liaison (32), la tête (40) de la vis de liaison (32) reposant sur une face frontale (58) du corps de calage (28).

2. Dispositif de liaison transversale selon la revendication 1, **caractérisé en ce que** le corps d'écartement (24) est fabriqué sous la forme d'un paquet, à partir de pièces individuelles (25) en tôle d'acier qui sont alignées l'une contre l'autre dans sa direction longitudinale, au moyen d'un procédé d'estampage par paquets.

3. Dispositif de liaison transversale selon la revendication 1 ou 2, **caractérisé en ce que** la section transversale du corps d'écartement (24) a la même forme que la section transversale de l'encoche longitudinale (20) de la barre profilée (10).

4. Dispositif de liaison transversale selon l'une quelconque des revendications 1 à 3, **caractérisé en ce que** le corps d'écartement (24) comporte une fente longitudinale (48) pour faciliter l'écartement.

5. Dispositif de liaison transversale selon l'une quelconque des revendications 1 à 4, **caractérisé en ce que** le corps de calage (28) est dirigé, dans le corps d'écartement (24), avec sa pointe de calage contre le coulisseau (34).

6. Dispositif de liaison transversale selon l'une quelconque des revendications 1 à 5, **caractérisé en ce que** la surface intérieure (44) du corps d'écartement (24) qui coopère avec le corps de calage (28).est conformée en correspondance avec le chanfrein de calage du corps de calage (28).

7. Dispositif de liaison transversale selon l'une quelconque des revendications 1 à 6, **caractérisé en ce que** le corps de calage est une gaine (28) qui présente une surface enveloppe (42) qui s'étend de manière conique et **en ce que** le corps d'écartement (24) présente une surface intérieure (44) qui s'étend de manière conique.

8. Dispositif de liaison transversale selon l'une quelconque des revendications 1 à 7, **caractérisé en ce que** la surface (50) du corps d'écartement (24) qui est dirigée vers la surface intérieure de l'encoche longitudinale (20) est, au moins partiellement, rendue rugueuse ou munie de parties saillantes ou en creux, en particulier de rainures, de cannelures ou de dents.

9. Dispositif de liaison transversale selon la revendication 8, **caractérisé en ce que** les rugosités ou les parties saillantes sont réalisées sous la forme de pointes (56) qui constituent des barbes.
